# EUROPEAN PATENT APPLICATION

(11) **EP 1 710 935 A1**
(43) Date of publication of application: **11.10.2006**
(21) Application number: 05290788.8
(22) Date of filing: 07.04.2005
(51) Int. Cl.: H04B 10/18

(54) **Optical fiber line with dispersion compensation**

(71) Applicant: ALCATEL, 75008 Paris (FR)
(72) Inventor: Lavigne, Bruno, 92160 Antony (FR); Charlet, Gabriel, 91190 Villiers-le-Bacle (FR); Antona, Jean-Christophe, 92120 Montrouge (FR)
(74) Representative: Kohler Schmid Möbus

(57) **Abstract**

An optical fiber line (7) for transmitting an optical signal from a first optical node (1) to a second optical node (2) of a fiber optic communication system comprises a plurality of optical fiber spans (3, 8) interconnected by dispersion compensating modules (4, 6), wherein exactly one of the dispersion compensating modules (6) comprises a Gires-Tournois etalon. In this way, dispersion cumulated in the optical fiber line (7) is compensated while at the same time cross-channel effects amplified by the dispersion compensation are reduced.

## Description

### Background of the invention

The invention relates to an optical fiber line for transmitting an optical signal from a first optical node to a second optical node of a fiber optic communication system, comprising a plurality of optical fiber spans being interconnected by dispersion compensating modules.

Dispersion management strategy represents one of the key issues for point-to-point transmission systems when data rate exceeds 2.5 Gbit/s. Complexity in the dispersion management is largely increased when multi-point to multi-point transmissions are envisioned as for the case of transparent or hybrid networks. Such networks are composed of transparent nodes as an Optical Add Drop Multiplexer (OADM), i.e. without any conversion of the optical signal into the electrical domain and allowing the addition or the extraction of channels.

The different nodes are interconnected by optical fiber transmission lines including a concatenation of transmission spans. Such transmission spans are composed of dispersive fiber spans and related dispersion compensating modules. Because it is possible to extract or to add any channels at any nodes having different origins, the management of the dispersion becomes quite complex. One solution consists in the periodic nulling -full compensation- of the cumulated dispersion at each node.

However, this periodic reset of the dispersion may cause an increase of the interaction between channels in the case of WDM transmissions due to the Four Wave Mixing (FWM) or the cross phase modulation (XPM). These impairments are critical for any types of line fibers but more peculiarly in the case of line fibers with low group velocity delay (GVD) and cause signal quality degradations.

So far, solutions investigated are based on the use of dispersion compensating fibers (DCF) or Integrated Fiber Bragg Gratings (IFBG). Dispersion compensation using DCF amounts to cancel the cumulated dispersion over a dispersive transmission fiber by adding a fiber with the same cumulated dispersion but of opposite sign. As a result, all the channels that have been temporally separated during the propagation are resynchronised at the output of the DCF. When such a scheme is reproduced several times, cross-channel effects such as FWM and XPM are magnified.

### Object of the invention

It is the object of the invention to compensate for dispersion cumulated in an optical fiber line between two optical nodes while at the same time reducing cross-channel effects amplified by the dispersion compensation.

### Short description of the invention

This object is achieved by an optical fiber line as described above, wherein exactly one of the dispersion compensating modules comprises a Gires-Tournois etalon.

The proposed solution consists in reducing or cancelling the cross-channel effects by using channelized Gires-Tournois interferometer-based dispersion compensating modules inserted into only one dispersion compensating module between two nodes, the reminder of the dispersion compensating modules being based on the use of classical dispersion compensating fibers or other classical means of dispersion compensation.

The use of Gires-Tournois etalons for dispersion compensation is known as such, see e.g. US 2003/0235365 A1, as well as the papers "Fiber Dispersion and Dispersion Slope Compensation in a 40-Channel 10-Gb/s 3200-km Transmission Experiment Using Cascaded Single-Cavity Gires-Tournois Etalons", by D. Yang, C. Lin, W. Chen, and G. Barbarossa, IEEE Photonics Lett., Vol. 16, N°.1, January 2004, and "Demonstration of 109x10G dense WDM over more than 18,000 km using novel periodic-group-delay-complemented dispersion compensation and dispersion-managed solitons", by L.F. Mollenauer et al, Proceedings ECOC'03, Postdeadline paper.

However, the use of only one Gires-Tournois etalon between two nodes for reducing cross-channel effects constitutes a novel approach to dispersion compensation.

In an advantageous embodiment, the dispersion compensating module comprising the Gires-Tournois (GT) etalon is located at first or the second optical node. In this case, the optical fiber line has to be modified only at the position of the node which is easily accessible, and the remainder of the network can be left unchanged.

In a further embodiment, the remainder of the dispersion compensating modules comprises dispersion compensating fibers and/or integrated fiber Bragg gratings. These are easily available means for dispersion compensation.

In another preferred embodiment, the dispersion cumulated in the optical fiber line is fully compensated by the dispersion compensating modules. The dispersion compensation is performed by classical dispersion compensation modules as well as by the Gires-Tournois etalon, leading to a nulling of dispersion at the second node.

In a highly preferred embodiment, the Gires-Tournois etalon compensates the (differential) group delay induced by the dispersion of the optical fiber line within the bandwidth of each channel of the optical signal. Conversely, the channel-by-channel differential group delay is not compensated, By generating a time delay between channels, inter-channel effects are reduced which otherwise would lead to a degradation of the optical signal.

The invention is also realized in a method for compensating dispersion of an optical signal transmitted through an optical fiber line from a first optical node to a second optical node of a fiber optic communication system as described above, wherein the dispersion cumulated in the optical fiber line is fully compensated by the dispersion compensating modules and a time-delay between the channels of the optical signal is generated by the Gires-Tournois etalon. Using this method, the dispersion cumulated over the fiber line can be compensated and at the same time, inter-channel effects such as Four Wave Mixing (FWM) and cross phase modulation (CPM) can be reduced.

The invention is further realized in a node for a fiber optic communication system, comprising an optical add-drop multiplexer and a dispersion compensating module with a Gires-Tournois etalon. Such a node can be used for compensating at least partially dispersion generated in an optical signal transmitted through an optical fiber line, for generating a time-delay between the channels of the optical signal, and for performing optical add-drop multiplexing of the channels of the optical signal.

The invention is also realized in a fiber optic communication system comprising a plurality of nodes, preferably designed as described above, interconnected by optical fiber lines as described above, advantageously forming a transparent or hybrid network. In case that only the nodes of the fiber optic communication system receiving optical signals are modified, the optical network only has to be changed at the node level, so that only small changes in the fiber optic communication network are required.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a dispersion map between two nodes of a fiber optic communication system;
- Fig. 2: shows the layout of a section of a fiber optic communication system with an optical fiber line and a dispersion compensating module comprising a Gires-Tournois etalon implementing the dispersion map of Fig. 1;
- Fig. 3: shows the group delay compensation in the case of a dispersion compensating fiber (Fig. 3a) and of a Gires-Tournois etalon (Fig. 3b);
- Fig. 4: shows the Q-factor evolution versus wavelength of a system with exactly one Gires-Tournois etalon in each optical fiber line between two nodes (Fig. 4a) and with classical dispersion compensation (Fig. 4b).

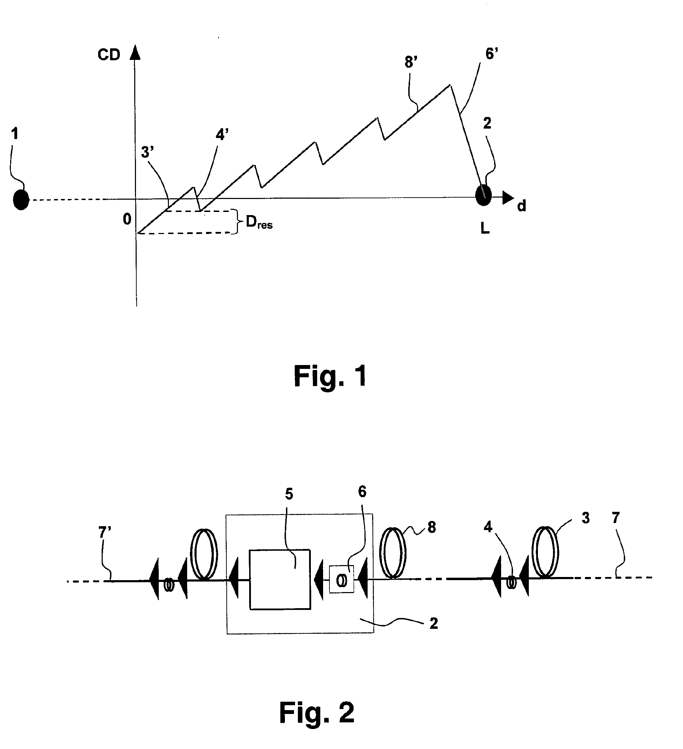

**Fig. 1** shows an example of a dispersion map that is used between a first optical node **1** and a consecutive second optical node **2** of a section of a fiber optic communication system forming a transparent network represented in **Fig. 2.** The dispersion map of Fig. 1 shows the cumulated dispersion **CD** of an optical signal in dependence of the distance **d** from a position between the two nodes 1, 2 being chosen as the origin **0** of the plot. In order to simplify the representation, the evolution of the dispersion cumulated between the first node 1 and the origin 0 is not shown in Fig. 1, whereas the evolution of cumulated dispersion is explicitly represented for the length **L** covering the distance between the origin 0 and the second node 2.

The evolution of CD at the origin 0 starts with a positive slope **3',** being generated by an optical fiber span 3 shown in Fig. 2 as a portion of an optical fiber line **7** connecting the first and second node 1, 2. At the end of the optical fiber span 3, a dispersion compensation module (DCM) **4** is located. The DCM 4 is based on a dispersion compensating fiber (DCF) which is used to compensate at least partially the dispersion cumulated in the fiber span 3 by generating CD with a negative slope **4',** as shown in Fig. 1. The combination of an optical fiber span 3 being followed by a DCM 4 forms a so-called transmission span. After the transmission span, a residual cumulated dispersion Dᵣₑₛ shown in Fig. 1 is generated, as the dispersion generated in the optical fiber span 3 is not fully compensated by the DCM 4.

The optical fiber line 7 comprises four further transmission spans along the length L, the final one being represented in Fig. 2, consisting of a last optical fiber span **8** and a last DCM **6,** the respective dispersion slopes **8', 6'** of which are shown in Fig. 1. The cumulated dispersion gathered along the optical fiber line 7 is cancelled by the final dispersion compensating module 6 being located inside the second node 2, which further comprises an optical add-drop multiplexer (OADM) **5** for changing the number of channels of the optical signal. The second optical node 2 is connected to a further node (not shown) through an additional optical fiber line **7'** through which an optical signal originating from the second node 2 is transmitted.

When using exclusively DCF-based dispersion compensating modules between two nodes, the canceling of the cumulated dispersion comes with the temporal re-alignment of all the channels. When such resynchronization is repeated several times because of the crossing of several nodes, it induces a dramatic increase of the cross-channel effects as FWM and XPM, then severely impairing the transmission performance of 10 Gbit/s channels.

It is possible to decrease these cross-channel effects drastically when temporal channel re-alignment at the output of the last DCM 6 is avoided or limited. For this, the last DCM 6 comprises a Gires-Tournois etalon instead of a DCF. The novelty of this solution does not come from the use of dispersion compensating modules comprising GT etalons for performing dispersion compensation in transmission systems, but an innovation is brought with the insertion of only one dispersion compensation module 6 with a GT etalon between the two optical nodes 1, 2. The remnant of the dispersion compensation is still realized by means of classical DCF-based dispersion compensation modules such as the module 4 of Fig. 2.

Using an optical node 2 with a DCM 6 comprising a GT etalon and an OADM 5, it is possible to compensate at least partially the dispersion generated in an optical signal transmitted through the optical fiber line 7, generating a time-delay between the channels of the optical signal for avoiding cross-channel effects, and performing optical add-drop multiplexing of the channels of the optical signal. Preferably, all of the nodes in a fiber optic communication system are designed in the way described above. In such a way, it is assured that each of the fiber lines connecting two nodes of the fiber optic system has exactly one DCM comprising a GT etalon.

With reference now to Fig. 1, it can be seen that the dispersion compensation is partial along the optical transmission line (Dᵣₑₛ≠0). Hence, the channel resynchronisation is not effective over the five subsequent transmission spans. Conversely, because of the reset of the residual dispersion at the level of the second node 2, the temporal re-alignment is done when using only DCF or integrated fiber Bragg gratings. Thanks to the properties of GT etalons, such a resynchronisation is avoided when one DCF-based module (whatever its location between two nodes) is replaced by a GT-based dispersion compensating module.

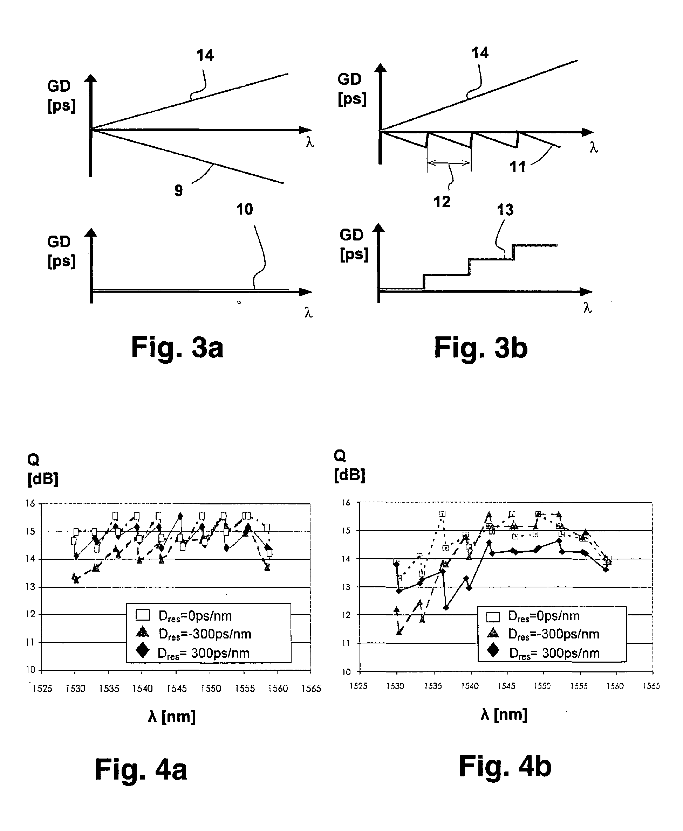

As to clarify the advantage of dispersion compensating modules comprising GT etalons with respect to DCF regarding the resynchronization issue, **Fig. 3a** shows the group delay versus wavelength in the case of the DCF compensating scheme, whereas **Fig. 3b** shows the (differential) group delay in the GT etalon compensating scheme. Note that dispersion is defined as the derivative of the group delay with respect to wavelength, i.e. dispersion=d(group delay)/dA.

In Fig. 3a, the group delay plot **14** of a fiber span and the group delay plot **9** of a DCF are shown in the upper diagram. The lower diagram shows the superposition of both group delay plots 8, 9, leading to a complete dispersion compensation over the whole wavelength band, as the group delay evolution of the DCF is the same as for the fiber span, but with a negative slope. As the group delay is constant for all WDM channels of the optical signal, the channels are completely resynchronized, thus leading to unwanted cross-channel effects.

In Fig. 3b, the group delay plot 14 (linear) of a fiber span and the group delay plot **11** (saw-tooth) of a GT etalon are shown in the upper diagram. In the GT case, the slope matching is only ensured in a spectral window corresponding to a channel bandwidth **12.** The result of the combination of the group delay of the fiber span and the GT etalon gives a group delay evolution **13** having a step function shape (lower diagram), i.e. a temporal re-alignment within the channel spectral window as the consequence of the dispersion compensation but with the existence of a time delay from channels to channels. This time-delay leads to the reduction of unwanted cross-channel effects.

The advantage of this solution has been experimentally demonstrated, the results being shown in **Fig. 4.** Experiments have consisted in comparing the performance recorded after 1200 km for 20 channels among 80 (channel spacing of 50 GHz), modulated in amplitude by 10 Gbit/s NRZ pseudo random sequences of 2²³-1, for two transmission systems over LEAF having a periodic dispersion reset every five spans (400 km), named "reference" (Fig. 4b) and "alternative" (Fig. 4a) systems . The reference system shown in Fig. 4b deals with the case where all the compensating modules are based on DCF, while the alternative system shown in Fig. 4a refers to the case when the last DCF compensating module is replaced by a GT module (i.e. a DCM with a GT etalon). The optical power per channel in both cases is 0 dBm.

Fig. 4 depicts the Q-factor evolution versus wavelength for the reference system (right) and the alternative system (left) for three different residual dispersion values of -300 ps/nm, 0 ps/nm, and 300 ps/nm. In all the cases, better performance for the alternative case (gain of more than 2 dB in the short wavelength range) is observed, in particular in the short wavelength range where cross-channel effects such as FWM are known to be more critical.

In summary, the main advantage of the solution described above lies in the improvement of the quality of transmission as the consequence of the reduction of the cross-channel effects when the residual dispersion is cancelled. This advantage is even more pronounced in the case of a line fiber with a low GVD value. The flexibility and easiness to change the compensating modules if required (channel spacing not adapted for example) is a further advantage because of their reduced number in the network. In particular, when the GT-modules are located within the nodes of the network, the latter has to be modified only at the node level.

In comparison with a solution replacing all of the DCMs with GT-modules, possible thermal effects are reduced which may impact the amplitude response of the GT. Also, possible GT filter effects are reduced because of the cascade of a reduced number of GT etalons. The above solution is only constrained by the limitation of GT-modules themselves, i.e. their intrinsic data-rate and channel spacing dependency.

## Claims

1. Optical fiber line (7) for transmitting an optical signal from a first optical node (1) to a second optical node (2) of a fiber optic communication system, comprising a plurality of optical fiber spans (3, 8) interconnected by dispersion compensating modules (4, 6),
**characterized in that**
exactly one of the dispersion compensating modules (6) comprises a Gires-Tournois etalon.

2. Optical fiber line according to claim 1, wherein the dispersion compensating module (6) comprising the Gires-Tournois etalon is located at the first or the second optical node (1; 2).

3. Optical fiber line according to claim 1, wherein the remainder of the dispersion compensating modules (4) comprises dispersion compensating fibers and/or integrated fiber Bragg gratings.

4. Optical fiber line according to claim 1, wherein the dispersion cumulated in the optical fiber line (7) is fully compensated by the dispersion compensating modules (4, 6).

5. Optical fiber line according to claim 1, wherein the Gires-Tournois etalon compensates the group delay (14) induced by the dispersion of the optical fiber line (7) within the bandwidth (12) of each channel of the optical signal.

6. Method for compensating dispersion of an optical signal transmitted through an optical fiber line (7) from a first optical node (1) to a second optical node (2) of a fiber optic communication system according to one of the preceding claims, wherein the dispersion cumulated in the optical fiber line (7) is fully compensated by the dispersion compensating modules (4, 6) and a time-delay between the channels of the optical signal is generated by the Gires-Tournois etalon.

7. Node (2) for a fiber optic communication system, comprising an optical add-drop multiplexer (5) and a dispersion compensating module (6) with a Gires-Tournois etalon.

8. Use of a node according to claim 7 in a fiber optical communication system for compensating at least partially dispersion generated in an optical signal transmitted through an optical fiber line (7), for generating a time-delay between the channels of the optical signal, and for performing optical add-drop multiplexing of the channels of the optical signal.

9. Fiber optic communication system comprising a plurality of nodes (1, 2) preferably according to claim 7, interconnected by optical fiber lines (7, 7') according to claim 1.

10. Fiber optic communication system according to claim 9, forming a transparent or hybrid network.
